# EUROPEAN PATENT SPECIFICATION

(11) **EP 0 455 511 B1**
(45) Date of publication and mention of the grant of the patent: **12.07.1995**
(21) Application number: 91304048.1
(22) Date of filing: 03.05.1991
(51) Int. Cl.: F16J 9/00

(54) **A piston assembly**
Kolbenvorrichtung
Dispositif de piston

(30) Priority: 04.05.1990 US 519536
(43) Date of publication of application: 06.11.1991
(73) Proprietor: DRESSER-RAND COMPANY, Corning, New York 14830 (US)
(72) Inventor: Wehber, Wayne F., New York, N.Y. 14845 (US)
(74) Representative: Harvey, David Gareth

(56) References cited:
- EP-A- 0 197 654
- CH-A- 317 258
- DE-C- 1 026 142
- FR-A- 1 402 487
- FR-A- 1 446 110
- US-A- 3 149 543

## Description

This invention pertains to reciprocating-component machinery, such as reciprocating-piston engines, pumps, and gas compressors, and in particular to a novel piston assembly for reciprocation within a cylinder.

Reciprocating, ringed pistons are susceptible to high wear rates, notably in the piston ring lands or carriers, principally due to the spinning action of the piston rings during compression strokes of the piston.

It is an object of this invention to devise a piston assembly which provides wear-resistant piston ring seating surfaces.

FR-A-1,446,110 discloses a piston for use in high pressure compressors or pumps which are made up of several elements on a shank.

US-A-3,149,543 discloses the use of non-metallic elements to seat wear and seal rings.

The present invention is as claimed in the claims.

The invention provides a piston assembly for reciprocation within a cylinder, comprising a piston body having a reciprocation axis; piston-ring lands coupled to, and arranged lengthwise of said body; and means coupled to said body for (a) guiding said body in reciprocation within an enclosing cylinder, and (b) spacing said lands from confronting surfaces of such an enclosing cylinder; wherein said lands are formed of a non-metallic mineral to define wear-resistant, piston ring seating surfaces thereof.

Further objects of this invention, as well as novel features thereof, will become more apparent by reference to the following description, which is given by way of example only, taken in conjunction with the accompanying figures, in which:
Figure 1 is an axial, cross-sectional view of a preferred embodiment of the invention; and
Figure 2 is a view similar to Figure 1, of an alternative embodiment of the invention.

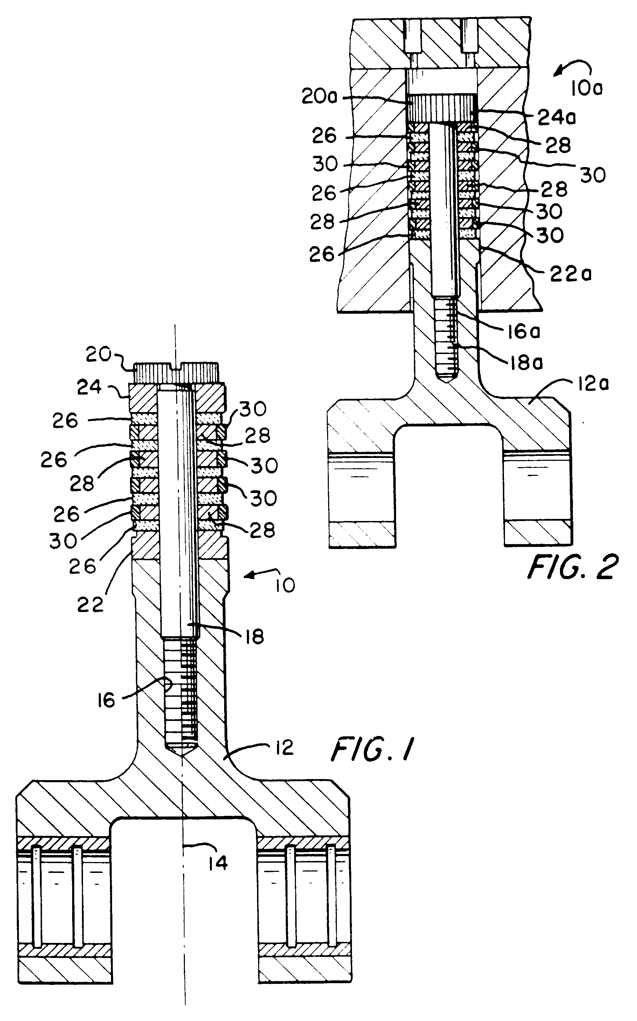

As shown in Figure 1, the novel piston assembly 10 comprises a piston body 12 having a longitudinal, reciprocating axis 14. The body 12 has an axial, threaded bore 16 formed therein which receives the threaded shank 18 of a headed bolt 20. Set against an uppermost, annular end of the body 12 is an apertured, lower, rider ring 22. Underlying the head of the bolt 20 is an apertured, upper, rider ring 24. Stacked between the rider rings 22 and 24, in interlayered fashion, are separate piston-ring lands 26, and separate piston spacers 28. Between pairs of adjacent lands 26, one spacer 28 is interposed.

The rider rings 22 and 24, together with the bolt 20, comprise means for guiding the piston body 12 in its reciprocation within a cylinder (not shown), and for spacing the lands 26 from the confronting surface of such a cylinder. The rider rings 22 and 24 have a greatest diameter which causes them to effect a slidable interface with such confronting surface of a cylinder, and piston rings 30, which are set within adjacent lands 26, and about the spacers 28, sealingly close onto the cylinder wall. The lands 26, however, have a common diameter which is smaller than that of the rings 22 and 24. Consequently, they do not contact the cylinder surface. To present a significantly wear-resistant surface to the piston rings 30, the lands 26 are formed of a non-metallic e.g. ceramic material.

An alternative embodiment of the inventive piston assembly 10a is similar in most respects to the embodiment 10 of Figure 1. This second embodiment 10a, however, dispenses with the separate rider rings. Rather, the piston body 12a has an uppermost, annular end which is radially expanded to define, thereat, a first guiding surface 22a. Body 12a is also axially bored and threaded at 16a to receive the threaded shank 18a of a headed bolt 20a. The head of the bolt defines a second, reciprocation-guiding surface 24a. Again, stacked between the bolt head and the uppermost, annular end of the body 12a are interlayered lands 26, of ceramic material, and piston spacers 28, arranged to receive the piston rings 30 between the ceramic lands 26. In this embodiment also, the diameter of the ceramic lands 26 is slightly less than the diameter of surfaces 22a and 24a.

While we have described the invention in connection with specific embodiments thereof, it is to be clearly understood that this is done only by way of example, and not as a limitation to the scope of the invention as claimed. For example, given numbers of spacers 28 and lands 26 are depicted, but the numbers of each are not limiting. Too, in each of the embodiments, headed bolts are employed; this is arbitrary, as the threaded bores 16 and 16a could receive a threaded stud which, in turn, would receive a topmost, threaded nut for closure onto the stack of lands 26 and spacers 28. These, and all such modifications and/or alterations of the disclosure are deemed to be within the ambit of the invention and embraced by the following claims.

## Claims

1. A piston assembly (10, 10a) for reciprocation within a cylinder, comprising:
a piston body (12) having a reciprocation axis (14);
piston-ring lands (26) coupled to, and arranged lengthwise of said body (12); and
means 22, 24; 22a, 24a coupled to said body (12) for (a) guiding said body in reciprocation within an enclosing cylinder, and (b) spacing said lands (26) from surfaces of the enclosing cylinder; wherein
said lands (26) are formed of a nonmetallic mineral and (a) define seating surfaces for piston rings (30), (b) confine piston rings (30) therebetween, and (c) are resistant to wear of said seating surfaces, by such piston rings, seated upon said surfaces and between said lands, due to spinning movement of such piston rings.

2. A piston assembly (10, 10a) as claimed in claim 1, comprising:
separate piston-ring lands (26), and separate spacers (28), interlayered along a length of said body (12, 12a);
means (18, 24: 18a, 24a) coupled to said body to hold said lands (26) and spacers (28) in position on said body;
said body-guidance means (22, 24, 22a, 24a) has one greatest diameter; and
said lands (26) have one, common, diameter which is less than said greatest diameter.

3. A piston assembly, according to claim 2, wherein:
said guiding and spacing means (22a, 24a) comprises means for effecting a slidable interface with such confronting surfaces of an enclosing cylinder.

4. A piston assembly, according to claim 2 or claim 3, wherein:
said body (12) is axially bored (16, 16a); and
said guiding and spacing means comprises a headed bolt (20a); wherein
the shank (18a) of said bolt (20a) is set in said bore (16a), and the head (22a) of said bolt (20a) comprises means for effecting a slidable interface with such confronting surfaces of such an enclosing cylinder.

5. A piston assembly, according to claim 4, wherein:
said axial bore (16a) in said body (12) is threaded;
said lands (26) are centrally apertured;
said shank (18a) of said bolt (20a) penetrates said lands (26) and threadedly engages said axial bore (18a) to secure said lands to said body.

6. A piston assembly, according to claim 2, wherein:
pairs of adjacent lands (26) are spaced apart, axially, by intervening spacers (28).

7. A piston assembly, according to claim 2, wherein:
said guiding and spacing means comprises (a) a headed bolt (20), and (b) a centrally-apertured rider ring (24).

8. A piston assembly, according to claim 7, wherein:
said body (12) has an axially-extending, threaded bore (16) formed therein; and
the shank (18) of said bolt (20) penetrates said rider ring and threadedly engages said threaded bore.

9. A piston assembly, according to claim 2, wherein:
said guiding and spacing means comprises (a) a headed bolt (20), and (b) a pair of centrally-apertured, and axially spaced apart rider rings (22, 24).

10. A piston assembly, according to claim 9, wherein:
said body (12) has an axially-extending, threaded bore (16) formed therein;
said lands (26) are centrally apertured and interposed between said rider rings (22, 24);
the shank (18) of said bolt (20) penetrates said rings (22,24) and lands (26), and threadedly engages said axial bore (16) to secure said rings (22, 24) and lands (26) to said body.

## Patentansprüche

1. Ein Kolbenaufbau (10, 10a) für Hin- und Herbewegung innerhalb eines Zylinders, umfassend:
einen Kolbenkörper (12) mit einer Hin- und Herbewegungsachse (14);
Kolbenringträgerstege (26), die an den Körper (12) gekoppelt und in Längsrichtung desselben angeordnet sind; und
Einrichtungen (22, 24; 22a, 24a), die an den Körper (12) gekoppelt sind zum (a) Führen des Körpers bei seiner Hin- und Herbewegung innerhalb eines umschließenden Zylinders und (b) Beabstanden der Trägerstege (26) von den Oberflächen des einschließenden Zylinders;
wobei die Trägerstege (26) aus einem nicht-metallischen Mineral ausgeformt sind und (a) Sitzoberflächen für Kolbenringe (30) festlegen, (b) Kolbenringe (30) zwischen sich einschließen und (c) beständig gegen Abrieb der Sitzoberflächen durch solche Kolbenringe, die auf den Oberflächen und zwischen den Trägerstegen sitzen, aufgrund von Drehbewegung solcher Kolbenringe sind.

2. Ein Kolbenaufbau (10, 10a) nach Anspruch 1, umfassend:
getrennte Kolbenringträgerstege (26) und getrennte Abstandshalter (28), die entlang der Länge des Körpers (12, 12a) zwischengeschoben sind;
Einrichtungen (18, 24; 18a, 24a), die an den Körper gekoppelt sind, um die Trägerstege (26) und die Abstandshalter (28) in ihrer Position auf dem Körper zu halten;
wobei die Körperführungseinrichtungen (22, 24, 22a, 24a) einen größten Durchmesser aufweisen; und
die Trägerstege (26) einen gemeinsamen Durchmesser aufweisen, der kleiner als der besagte größte Durchmesser ist.

3. Ein Kolbenaufbau nach Anspruch 2, bei dem die Führungs- und Abstandshaltereinrichtungen (22a, 24a) Mittel zum Ausbilden einer gleitfähigen Zwischenschicht mit den gegenüberliegenden Oberflächen eines einschließenden Zylinders umfassen.

4. Ein Kolbenaufbau nach Anspruch 2 oder Anspruch 3, bei dem:
der Körper (12) axial durchbohrt (16, 16a) ist und die Führungs- und Abstandshalteeinrichtung einen mit Kopf versehenen Bolzen oder Schraube (20a) umfaßt, wobei der Schaft (18a) des Bolzens (20a) in die Bohrung (16a) eingesetzt ist und der Kopf (22a) des Bolzens (20a) Mittel zum Erzeugen einer gleitfähigen Zwischenschicht mit den gegenüberliegenden Oberflächen von solch einem einschließenden Zylinder umfaßt.

5. Ein Kolbenaufbau nach Anspruch 4, bei dem:
die axiale Bohrung (16a) in dem Körper (12) mit Gewinde versehen ist;
die Trägerstege (26) in der Mitte mit einer Öffnung versehen sind;
der Schaft (18a) des Bolzens (20a) durch die Trägerstege (26) hindurchreicht und durch Schrauben in die axiale Bohrung (18a) eingreift, um die Trägerstege an dem Körper zu befestigen.

6. Ein Kolbenaufbau nach Anspruch 2, bei dem:
Paare benachbarter Trägerstege (26) in axialer Richtung durch zwischengelegte Abstandshalter (28) voneinander beabstandet sind.

7. Ein Kolbenaufbau nach Anspruch 2, bei dem:
die Führungs- und Abstandshalteeinrichtung (a) einen mit Kopf versehenen Bolzen (20) und (b) einen in seiner Mitte mit einer Öffnung versehenen Reiterring (24) umfaßt.

8. Ein Kolbenaufbau nach Anspruch 7, bei dem:
in dem Körper (12) eine sich in axialer Richtung erstreckende, mit Gewinde versehene Bohrung (16) ausgeformt ist, und
der Schaft (18) des Bolzens (20) durch den Reiterring hindurchreicht und durch Schrauben mit der mit Schraubgewinde versehenen Bohrung im Eingriff steht.

9. Ein Kolbenaufbau nach Anspruch 2, bei dem:
die Führungs- und Abstandshalteeinrichtung (a) einen mit Kopf versehenen Bolzen (20) und (b) ein Paar in ihrer Mitte jeweils mit einer Öffnung versehene und in axialer Richtung voneinander beabstandete Reiterringe (22, 24) umfaßt.

10. Ein Kolbenaufbau nach Anspruch 9, bei dem:
in dem Körper (12) eine sich in axialer Richtung erstreckende, mit Gewinde versehene Bohrung (16) ausgeformt ist;
die Trägerstege (26) in ihrer Mitte offen sind und zwischen die Reiterringe (22, 24) eingeschoben sind; der Schaft (18) des Bolzens (20) durch die Ringe (22, 24) und die Trägerstege (26) hindurchreicht und durch Schrauben in die axiale Bohrung (16) eingreift, um die Ringe (22, 24) und die Trägerstege (26) an dem Körper zu befestigen.

## Revendications

1. Ensemble à piston (10, 10a) en vue d'un mouvement alternatif à l'intérieur d'un cylindre, comprenant :
un corps de piston (12) ayant un axe (14) de mouvement alternatif ; des portées (26) pour segments de piston agencées sur la longueur dudit corps (12) et liées à celui-ci ; et
des moyens (22, 24 ; 22a, 24a) liés audit corps (12) pour (a) guider ledit corps en mouvement alternatif à l'intérieur d'un cylindre entourant, et (b) espacer lesdites portées (26) des surfaces du cylindre entourant ;
dans lequel
lesdites portées (26) sont formées d'un minéral non métallique et (a) définissent des surfaces d'appui pour des segments de piston (30), (b) confinent des segments de piston entre elles, et (c) sont résistantes à l'usure desdites surfaces d'appui par de tels segments de piston appuyés sur lesdites surfaces et entre lesdites portées due au mouvement de giration de tels segments de piston.

2. Ensemble à piston (10, 10a) selon la revendication 1 comprenant :
des portées (26) pour segments de piston, et des pièces d'écartement séparées (28), disposées en couche intermédiaire le long d'une longueur dudit corps (12, 12a) ;
des moyens (18, 24 ; 18a, 24a) liés audit corps pour maintenir lesdites portées (26) et lesdites pièces d'écartement (28) en position sur ledit corps ;
lesdits moyens de guidage du corps (22, 24 ; 22a, 24a) ayant un plus grand diamètre ; et
lesdites portées (26) ayant un diamètre commun qui est inférieur audit plus grand diamètre.

3. Ensemble à piston selon la revendication 2, dans lequel :
lesdits moyens d'écartement et de guidage (22a, 24a) comprennent des moyens pour effectuer une interface glissante avec de telles surfaces en vis-à-vis d'un cylindre entourant.

4. Ensemble à piston selon la revendication 2 ou 3 dans lequel :
ledit corps (12) est axialement percé (16, 16a); et
lesdits moyens d'écartement et de guidage comprennent un boulon à tête (20a) ; dans lequel
la tige (18a) dudit boulon (20a) est ajustée dans ledit trou (16a) et la tête (22a) dudit boulon (20a) comprend des moyens pour effectuer une interface glissante avec de telles surfaces en vis-à-vis d'un tel cylindre entourant.

5. Ensemble à piston selon la revendication 4 dans lequel :
le trou axial (16a) dans ledit corps (12) est fileté ;
lesdites portées (26) ont une ouverture centrale ;
ladite tige (18a) dudit boulon (20a) pénètre dans lesdites portées (26) et coopèrent par vissage avec ledit trou axial (18a) pour fixer lesdites portées audit corps.

6. Ensemble à piston selon la revendication 2, dans lequel :
des paires de portées (26) adjacentes sont espacées l'une de l'autre, axialement par l'intervention de pièces d'écartement (28).

7. Ensemble à piston selon la revendication 2, dans lequel :
lesdits moyens d'écartement et de guidage comprennent (a) un boulon à tête (20) et (b) une bague de chevauchement (24) à ouverture centrale.

8. Ensemble à piston selon la revendication 7, dans lequel :
ledit corps (12) a un trou (16) fileté s'étendant axialement formé à l'intérieur ; et
la tige (18) dudit boulon (20) pénètre dans ladite bague de chevauchement et coopère par vissage avec ledit trou fileté.

9. Ensemble à piston selon la revendication 2, dans lequel :
lesdits moyens d'écartement et de guidage comprennent (a) un boulon à tête (20) et (b) une paire de bagues de chevauchement (22, 24), espacées l'une de l'autre axialement, et ayant une ouverture centrale.

10. Ensemble à piston selon la revendication 9, dans lequel :
ledit corps (12) a un trou (16) fileté s'étendant axialement formé à l'intérieur ;
lesdites portées (26) ont une ouverture centrale et sont interposées entre lesdites bagues de chevauchement (22, 24) ;
la tige (18) dudit boulon (20) pénètre dans lesdites bagues (22, 24) et lesdites portées (26) et coopère par vissage avec ledit trou axial (16) pour fixer lesdites bagues (22, 24) et lesdites portées (26) audit corps.
